# EUROPEAN PATENT SPECIFICATION

(11) **EP 4 366 271 B1**
(45) Date of publication and mention of the grant of the patent: **01.07.2026**
(21) Application number: 23207230.6
(22) Date of filing: 01.11.2023
(51) Int. Cl.: H04L 61/5092

(54) **ADDRESS GENERATION SYSTEM FOR A WIRELESS COMMUNICATION NETWORK**
ADRESSENERZEUGUNGSSYSTEM FÜR EIN DRAHTLOSES KOMMUNIKATIONSNETZ
SYSTÈME DE GÉNÉRATION D'ADRESSES POUR UN RÉSEAU DE COMMUNICATION SANS FIL

(30) Priority: 04.11.2022 FI 20225999
(43) Date of publication of application: 08.05.2024
(73) Proprietor: Wirepas Oy, 33720 Tampere (FI)
(72) Inventor: KASEVA, Ville, 33720 Tampere (FI); RAOUL, Gwendal, 38340 Vorappe (FR)
(74) Representative: Berggren Oy

(56) References cited:
- EP-A1- 1 395 001
- WO-A1-2019/169482
- US-A1- 2016 087 936
- MARIAGER J PETERSEN P ET AL: "Transmission of IPv6 Packets over Digital Enhanced Cordless Telecommunications (DECT) Ultra Low Energy (ULE); rfc8105.txt", TRANSMISSION OF IPV6 PACKETS OVER DIGITAL ENHANCED CORDLESS TELECOMMUNICATIONS (DECT) ULTRA LOW ENERGY (ULE); RFC8105.TXT, INTERNET ENGINEERING TASK FORCE, IETF; STANDARD, INTERNET SOCIETY (ISOC) 4, RUE DES FALAISES CH- 1205 GENEVA, SWITZERLAND, 3 May 2017 (2017-05-03), pages 1 - 22, XP015119454
- WIREPAS OY: "DECT-2020 Rel2 IPv6 address configuration", vol. DECT, 17 March 2023 (2023-03-17), pages 1 - 4, XP014446985, Retrieved from the Internet <URL:ftp://docbox.etsi.org/DECT/DECT/05-CONTRIBUTIONS/2023/DECT(23)000047_DECT-2020_Rel2_IPv6_address_configuration.docx> [retrieved on 20230317]
- THOMSON CISCO T NARTEN IBM T JINMEI TOSHIBA S: "IPv6 Stateless Address Autoconfiguration; rfc4862.txt", IPV6 STATELESS ADDRESS AUTOCONFIGURATION; RFC4862.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2007 (2007-09-01), XP015052408

## Description

### Technical field

The application relates generally to an address generation system for a wireless communication network.

### Background

A single large-scale, Internet Protocol version 6 (IPv6)-related wireless mesh network, which comprises multiple radio node devices, may comprise multiple border routers and multiple sinks for robustness, capacity, and scalability reasons. The border routers may be connected to a same link and reside on a same IPv6 subnet in a physical topology, e.g. when a backhaul link is an Ethernet link and the border routers are connected to the same link. The border routers may also be connected logically, but not physically, to the same link, e.g. through a bridged layer 2 (L2) Virtual Private Network (VPN) and reside on the same IPv6 subnet.

Neighbour Discovery (ND) mechanism for IPv6 enables node devices on a specific link to carry out an autoconfiguration mechanism. The discovery mechanism allows routers to advertise their presence on a link by means of Router Advertisement (RA) messages and router and other IPv6 node devices to resolve link layer (LL) addresses of on-link neighbours by using Neighbour Solicitation (NS) and Neighbour Advertisement (NA) messages.

Stateless Address AutoConfiguration (SLAAC) mechanism for IPv6 allows a node device to generate its IPv6 address automatically by means of IPv6 prefix, which has been obtained e.g. from RA messages or some other messages, combined with an Interface Identifier (IID) that has been generated e.g. from its LL address or some other address or information.

A basic IPv6 subnet model specifies that an IPv6 subnet does not span over multiple links. Different links, using a same or different LL technology, should be in different IPv6 subnets and use Internet Protocol (IP) routing to communicate between each other.

The ND proxy mechanism for IPv6 specifies a method for bridging multiple links into a single IPv6 subnet by allowing proxying devices, e.g. border routers, to answer to NS messages with NA messages on behalf of other devices, e.g. node devices. This proxying is done according to an ND proxy cache, which resides in a proxying device and comprises IPv6 addresses to be proxied. The ND proxy mechanism may reside e.g. in a border router and the corresponding ND proxy cache, which resides also in said border router, may comprise IPv6 address of node devices that are connected to said border router.

The use of the ND proxy mechanism enables, compared to the traditional IP routing, that a single subnet prefix is sufficient to support multiple physical links and there is no need to allocate subnet numbers to different networks, which simplifies a management. Additionally, its use allows to easily connect at least one leaf link to an existing network without requiring any coordination with the Internet Service Provider (ISP), or upstream router, and to suppress broadcast heavy IPv6 ND messaging for down-stream network when the downstream network provides more efficient technology-specific alternatives for the same.

When the ND proxy mechanism is used, and a node device changes from one sink and border router to another sink and border router, ND proxy caches in these border routers will comprise the same IPv6 address for the node device. Thus, both ND proxies will answer NS/NA messages to the same IPv6 address, which results an undefined operation.

Embodiments of the known address generation methods are disclosed in Thomson et al.'s publication "IPv6 Stateless Address Autoconfiguration", RFC 4862, and published patent application US 2016/087936.

### Summary

One object of the invention is to withdraw the drawbacks of known solutions and to provide an address generation method to generate a unique unicast internet address for a radio node device in all ND proxies and to keep the ND proxies and external devices outside a wireless communication network updated so that a downlink information from the external devices is sent through a correct border router and a correct sink device.

One object of the invention is fulfilled by providing the address generation system, radio node device, address generation method, computer program, and computer-readable medium according to the independent claims.

Embodiments of the invention are disclosed in the claims.

One address generation system for a wireless communication network comprises at least one sink device and at least one radio node device. Each radio node device is configured to communicate with the at least one sink device or other radio node device belonging to the at least one radio node device. Each radio node device is further configured to generate its internet address comprising a sink identifier of a sink device belonging to the at least one sink device and a network address of said radio node device so that said radio node device is accessible through said sink device.

One radio node device for an address generation in a wireless communication network comprises a controller and a radio communicator. The controller and the radio communicator are configured to carry out a wireless communication with at least one sink device or other radio node device belonging to the wireless communication network. The controller is further configured to generate an internet address comprising a sink identifier of a sink device belonging to the at least one sink device and a network address of said radio node device so that the radio node device is accessible through the sink device.

One address generation method for a wireless communication network, which is carried out by the previous radio node device. The method comprises a following step of communicating, by a radio node device with a sink device or with other radio node device belonging to the wireless communication network. The method further comprises a following step of generating, by the radio node device, its internet address comprising a sink identifier of the sink device and a network address of said radio node device so that said radio node device is accessible through said sink device.

One computer program comprises instructions, which, when the computer program is carried out (executed, performed, run) by a processor, cause the radio node device according to the previous radio node device to carry out at least the steps of the previous address generation method.

One tangible, non-volatile computer readable medium comprises the previous computer program according to the previous computer program.

### Brief description of the figures

The exemplary embodiments of the address generation are explained with reference to the accompanying figures:
- fig. 1: presents an address generation system
- fig. 2: presents a flowchart of an address generation method
- fig. 3: presents an internet address format
- fig. 4: presents operational parts of a wireless radio node device

### Detailed description of the figures

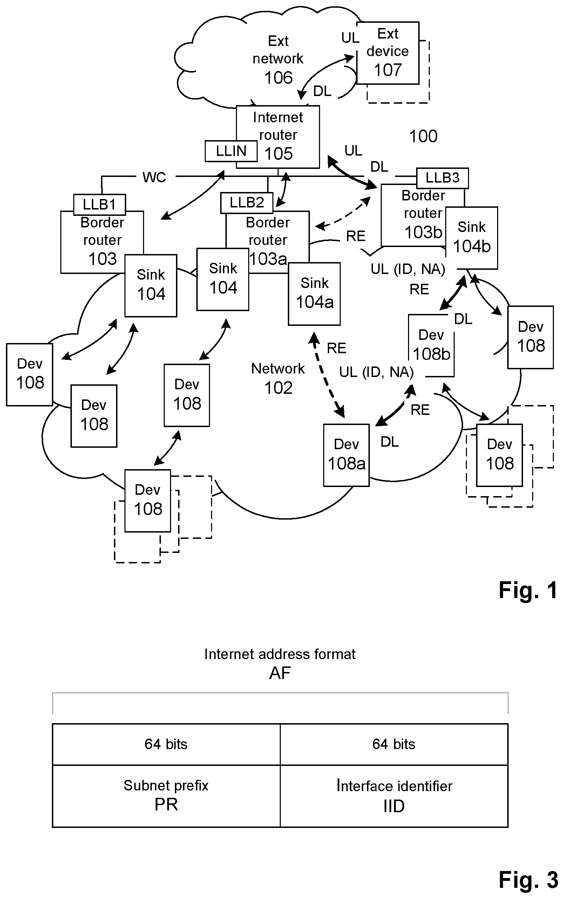

Fig. 1 presents an address generation system 100 that operates in a communication environment, wherein a communication is wireless at least in a wireless radio communication network (network system) 102 that comprises a plurality of wireless radio node devices (communication devices) 104, 108.

The plurality of devices 104, 108 comprise at least one sink device (sink) 104, e.g. one, two, three, four, or more sink devices 104, and at least one node device (node) 108, e.g. one, two, three, four, or more node devices 108. The devices 104, 108 are configured to operate on a same spectrum at a same geographical area, e.g. within the presented environment. The use of same spectrum enables a bi-directional radio communication between the devices 104, 108 in the network 102, whereupon radio communications (transmissions) transmitted by one device 104, 108 may be received by another device 104, 108 and vice versa. Alternatively, a part of the devices 104, 108 or all of the devices 104, 108 may be configured to operate different spec-trums at the same geographical area.

The system 100 is configured to any wireless radio communication network 102 that uses packet communications (transmissions) in the communication. The system 100 may be applied in wireless communication networks 102 complying Digital European Cordless Telecommunications (DECT-2020) standard.

The DECT-2020 standard is a radio access technology developed by ETSI. The DECT-2020 supports massive machine-type communication (mMTC) and ultra-reliable low latency communication (URLLC). On Physical (PHY) layer, the key technology components of the DECT-2020 are Orthogonal frequency-division multiplexing (OFDM), adaptive modulation and coding schemes (MCS), Modern Channel coding methods (Turbo, LDPC, Convolutional coding), Hybrid automatic repeat requests (HARQ) for both scheduled and contention based communications, and a support of multi-antenna communications with different Multiple-Input and Multiple-Output (MIMO) streams. On Medium access (MAC) layer and from system aspects, the key technology components of the DECT-2020 are a support of high number of Internet of Things (IoT) sensors, actuators, and other industrial applications; support of Mesh network topology, support of URLLC communication with very short delay (typical application may be wireless microphones); operation on frequencies that are license exempt; and support of multiple overlapping non-coordinated networks with cognitive radio capabilities to share spectrum resources between multiple networks.

Some other, non-limiting examples to which the system 100 may also be applied may comprise, but is not limited to, a Bluetooth Low Energy (BLE) mesh network, a Zigbee network, a Thread network, a Public Land Mobile Network (PLMN), a Wireless Local Area Network (WLAN), a Low Power Wide Area Network (LPWAN), a cellular based local area network, a cellular network, a wireless multi-hop network, or a wireless mesh network, e.g. wireless sensor network according to patent publication US 2021/0282004, and/or any other wireless networks.

The devices 104, 108 are configured receive packet communications with one radio technology, e.g. BLE communications or WLAN communications, which all communications are from the same network 102. However, at least one of the devices 104, 108, e.g. one, two, three, four, or more devices, may be configured to receive communications with at least two radio technologies, e.g. BLE communications and WLAN communications, which all communications are all from the same network 102.

The system 100 is explained mainly by using four devices 104a, 104b, 108a, 108b, which belong to the system 100, which are configured to operate in the network 102, and which are configured to carry out single-hop and multi-hop communication within the network 102. The sink devices 104a, 104b correspond with the sink devices 104 and the node devices 108a, 108b correspond with the node devices 108. The network 102 may also comprise a plurality of other devices 104, 108, whereupon the network 102 comprises the devices 104, 104a, 104b, 108, 108a, 108b.

As above has been explained, each device 104, 108 is configured to provide, by means of its radio communicator (communicator, data transferer) 436, the bi-directional single-hop and multi-hop radio communication with at least one other device 104, 108. This means that each device 104, 108 may be configured to operate as a transmitter, as a receiver, or as a transmitter-receiver when each device 104, 108 is configured to transmit at least one data communication (transmission, message) UL, DL to other device(s) 104, 108 and to receive at least one data communication UL, DL from the other device(s) 104, 108 in the network 102.

The system 100 also comprises at least one internet router device (internet router, Customer Edge (CE) router) 105, e.g. one, two, three, four, or more internet routers 105. Each internet router 105 is configured to operate as a router, which routes (delivers, forwards) data from other external communication network(s) 106, e.g. Internet, towards the network 102 and vice versa outside the network 102 alone or together with other existing internet router(s) 105, if such exists.

Each internet router 105 is configured to communicate with at least one external communication device 107, e.g. one, two, three, four, or more external devices 107, and with other internet routers 105, if such exist, in the external network(s) 106. One internet router 105 is also configured to communicate through a connection WC, which is a part of the external network(s) 106, with at least one border router device (border router) 103, e.g. one, two, three, four, or more border routers 103, outside the network 102. The connection WC is a wired connection, e.g. an Ethernet connection, as presented in the figure or a wireless connection WC, e.g. a WLAN or cellular connection.

Alternatively, said internet router 105 may be configured to communicate with at least one sink device 104, e.g. one, two, three, four, or more sink devices 104, if said internet router 105 comprises a border router 103, whereupon the border router 103 operates as an internet router 105.

The system 100 also comprises at least one border router 103, e.g. one, two, three, four, or more border routers 103. Each border router 103 is connected to an internet router 105 through the connection WC as presented in the figure. Alternatively, at least one border router 103, e.g. one, two, three, four, or more border routers 103, may operate as an internet router 105, whereupon each existing border router(s) 103, if such exists, which does not operate as an internet router 105, is connected to one border router 103, which operates as an internet router 105, through the connection WC. Alternatively, each border router 103 may operate as an internet router 105.

When at least one border router 103 operates as an internet router 105 in the system 100, the external device(s) 107 may communicate directly with the border router(s) 103, which operates as an internet router 105.

Each border router 103 is configured to operate as a wireless communication network entry between the network 102 and other external network(s) 106, e.g. Internet, and to deliver data from the other external network(s) 106 to the network 102 and vice versa by means of the sink device(s) 104. Each border router 103 comprises, or it has a connection to, at least one sink device 104, e.g. one, two, three, four, or more sink devices 104.

The system 100 also comprises the at least one sink device 104, which is configured to communicate with at least one border router 103 as above already explained. Each sink device 104 is configured to operate as a radio interface for the border router 103 in the network 102. Each sink device 104 may locate physically in connection with the border router 103 or separately in a different part of the network 102. If the border router 103 comprises several sink devices 104, at least one, e.g. one, two, three, four, or more sink devices 104, may locate in connection with the border router 103 and others separately in different parts of the network 102.

Each sink device 104 is a fixed router device (mesh router), but node devices 108 are configured to operate in different fixed or non-fixed roles in the network 102. The node devices 108 in the system 100 are router devices and non-router devices depending on whether a node device 108 needs to participate in data routing (delivering, forwarding). One method for selecting router and non-router roles in the network 102 may be e.g. according to the method explained in patent publication US 10,499,264.

Each mesh router 104, 108 is configured to maintain a connectivity of the system 100 and routes data of other devices 104, 108 when necessary. Each non-router device 108 is configured to provide a bi-directional communication in order to transmit its own data and to receive data directed for it similarly as sink and mesh router devices 104, 108, but the non-router device 108 does not route data of other devices 104, 108. Each of node devices 108 is configured to operate at least as a router or non-router device.

The system 100 comprises the node devices 108 so that a part of the node devices 108 may be unable to communicate directly with the sink device(s) 104 (border router 103) due to extensive distance between the node devices 108 and limited radio range, whereupon it is necessary to use multi-link (multi-hop) communication between each node device 108 and the sink device 104.

The system 100 comprises also a backend system (not presented in the figure) that is an external control system, monitor system, or both, and it may be implemented in a high computing capacity computer. Alternatively, the backend system may be implemented lightly in a mobile device (phone), which communicates with the internet router(s) 105, border router(s) 103, or directly with one of devices 104, 108 by using a radio interface of the network 102 or another radio interface, e.g. BLE or Radio Frequency IDentification (RFID) interface, for delivering e.g. a configuration information into the network 102. In the case of such arrangement, the mobile device may also have a connection to a high computing capacity computer, whereupon it operates as an internet router 105.

The system 100 is configured to generate an internet address IA for each node device 108 and use the generated address IA so that external devices 107 and internet routers 105 outside the network 102 can communicate a downlink packet communication DL to a relevant node device 108 through a correct border router 103 and a correct sink device 104 of which routing topology the relevant node device 108 is currently in.

The internet address IA of the node device 108 may be a unicast IPv6 address or a unicast IPv4 address.

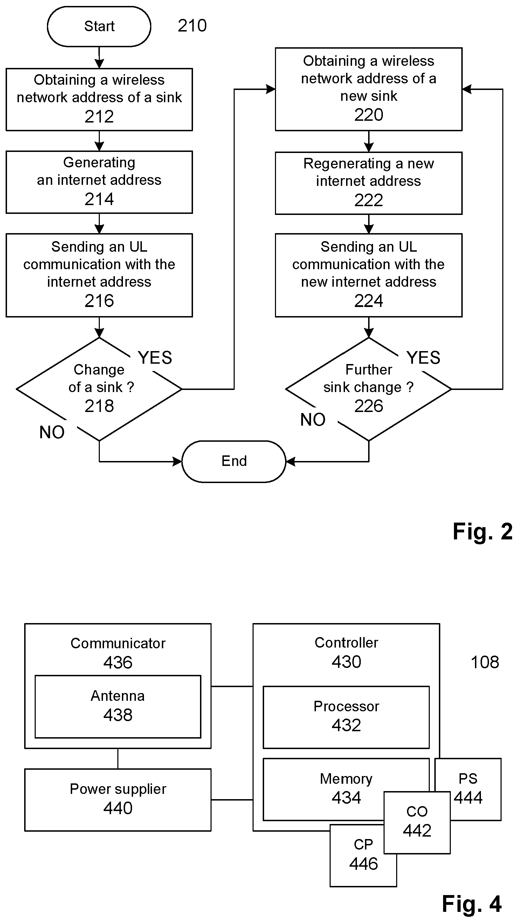

Fig. 2 presents an address generation method 210 for generating the internet address IA for the node device 108. The method 210 is carried out in the system 100, which has been explained above.

At step 212, one of node devices 108, a node device 108a that corresponds with node devices 108, has associated, by means of its controller 430 and the communicator 436, in a single-hop communication directly with a sink node 104a that corresponds with other sink devices 104 as presented in the figure. If the node device 108a sends an uplink internet packet (IP) communication (message) UL, e.g. an uplink IPv4 or IPv6 communication, to the sink device 104a or outside the network 102, it is communicated directly to the sink device 104 and additionally through the sink device 104a, if a destination (receiver) of the packet communication UL is outside the network 102. Correspondingly, when an external device 107, an internet router 105, or a border router 103 outside the network 102 or the sink device 104a sends a downlink IP communication DL, e.g. an downlink IPv4 or IPv6 communication, to the node device 108a, the packet communication DL is routed through the sink device 104a, if a source (sender) of the packet communication DL is outside the network 102 and additionally it is communicated directly to the node device 108a.

Alternatively, the node device 108a may be associated, by means of its controller 430 and the communicator 436, with an intermediate node device 108, which operates as a mesh router between the node device 108a and the sink device 104a in a multi-hop communication. The node device 108a is then a part of the routing topology of the sink device 104a, which means that an uplink packet communication UL of which the node device 108a has sent to the sink device 104a or outside the network 102, is routed through at least one intermediate node device 108, e.g. one, two, three, four, or more intermediate node devices 108, if a destination (receiver) of the packet communication UL is the sink device 104a. The packet communication UL is additionally routed through the sink device 104a, if the destination of the packet communication UL is outside the network 102. When an external device 107, an internet router 105, or a border router 103 outside the network 102 or the sink device 104a sends a downlink packet communication DL to the node device 108a, the packet communication DL is routed through the sink device 104a, if a source (sender) of the packet communication DL is outside the network 102. The packet communication DL is additionally routed through at least one intermediate node device 108, e.g. one, two, three, four, or more intermediate node devices 108 to the node device 108a or communicated directly to the node device 108a, if e.g. changes in the association have occurred.

The node device 108a has a network address (node address) NA, a 32-bits long DECT-2020 NR RD-ID identifier, and it obtains, by means of its controller 430 and communicator 436, a network address of the current sink device 104a from the known association mechanism, when the node device 108a associates with the sink device 104a or said intermediate node device 108.

At step 214, the node device 108a generates, by means of its controller 430, its internet (IP) address IA that identifies and locates the node device 108a in the network 102. The node device 108a generates the internet address IA from a sink identifier ID, which relates to the current sink device 104a, and from the network address NA of said radio node device 108a by processing the sink identifier ID and the network address NA at least partly, e.g. by using at least one of a concatenation, hashing, and other processing of the sink identifier ID and the network address NA. The sink identifier ID comprises the network address of the sink device 104a, e.g. a 32-bits long DECT-2020 NR RD-ID identifier, a generated random value, or any identifier, which enables to identify the sink device 104a. Alternatively, the sink identifier ID may comprise any identifier, e.g. an identifier of the border router 103a to which the sink device 104a is connected, which enables the system 100 to communicate data from the external network(s) 106 to the node device 108a through the sink device 104a.

The node device 108a includes the processed sink identifier ID and network address NA in an interface identifier (IID) field of an internet (IP) address format AF presented in the figure 3. The address format AF comprises also an internet subnet prefix field for an internet subnet prefix (network prefix) PR, which consisting of a subnet address of the network 102 that are same for all devices 104, 108 in the network 102. The generated internet address IA of the node device 108a thus consists of the subnet prefix PR in the subnet prefix field and the processed sink identifier ID and network address NA in the IID field so that an accessibility of the node device 108a from outside the network 102 is significantly improved when the correct sink device 104, 104a, 104b is known.

At step 216, the node device 108a communicates, by means of the controller 430 and the communicator 436, to the sink device 104a by sending an uplink packet communication UL to inform at least one of the sink device 104a, the border router 103a to which the sink device 104a is connected, and an external device 107, e.g. only the sink device 104a, only the border router 103a, the sink device 104a and the border router 103a, the sink device 104a and an external device 107 when relevant, the border router 103a and the external device 107 when relevant, or all of devices 103a, 104a, 107 when relevant, about its current internet address IA. After receiving the packet communication UL, its receiver(s), which comprises at least one of the border router 103a and the sink device 104a, is configured to update its ND proxy cache with the current address IA of the node device 108a.

The packet communication UL comprises the address of the node device 108a (source, sender), the address of the receiver (destination) 103a, 104a, 107, e.g. the address of the border router 103a, sink device 104a, or an external device 107, and in a payload of the packet communication UL, a unique identifier UID, which enables an external device 107 to send downlink packet communications DL from outside the network 102 to the correct node device 108a. Additionally, the payload of the packet communication UL may comprise its previous internet address IA, which comprises the sink identifier ID of a previous sink device 104. Additionally or alternatively in relation to the previous identifier option, the payload of the packet communication packet UL may comprise its generated, current internet address IA. Additionally to the previous option, the payload of the packet communication UL may comprise other information, e.g. an application related data, if the node device 108a should have to send such information.

At step 218, if the node device 108a changes the routing of its packet communications UL, DL so that the sink device 104a is changed to another sink device 104 according to the figure, it associates, by means of the controller 430 and the communicator 436, with a new sink device 104b directly or to another intermediate node device 108, which is configured to route packet communications UL to the new sink 104b or through at least one other intermediate node device 108, e.g. one, two three, four, or more intermediate node devices 108.

After the node device 108a has decided to carry out the sink change between the sink devices 104a, 104b, it does not inform the previous sink 104a about the forthcoming sink change. Alternatively, when the node device 108a makes a decision to carry out the sink change between the sink devices 104a, 104b, it may inform the previous sink device 104a, border router 103a, or both devices 103a, 104a about the sink change by sending an uplink packet communication RE to the previous device(s) 103a, 104a to inform about the sink change, whereupon the previous device(s) 103a, 104a may update its ND proxy cache by removing a non-existing association. Alternatively, the node device 108a may send the packet communication RE, which informs the sinks change, to the new sink device 104b, border router 103b, or both devices 103b, 104b that informs the previous device(s) 103a, 104a about the sink change.

At step 220, the node device 108a has associated with an intermediate node device 108b, which operates as a mesh router between the node device 108a and the sink device 104b, according to the figure. The node device 108a is then a part of the routing topology of the sink device 104b, which naturally means that an uplink packet communication UL of which the node device 108a has sent to the sink device 104b, is routed through at least one intermediate node device 108b, e.g. one, two, three, four, or more intermediate node devices 108b, if a destination of the packet communication UL is the sink device 104b. The packet communication UL is additionally routed through the sink device 104b, if the destination of the packet communication UL is outside the network 102. When a source of a downlink packet communication DL is outside the network 102, e.g. an external device 107, an internet router 105, a border router 103, or the sink device 104b, it sends a downlink packet communication DL to the node device 108a and the packet communication DL is routed through the sink device 104b, if the source is outside the network 102. The packet communication DL is additionally routed through at least one intermediate node device 108, e.g. one, two, three, four, or more intermediate node devices 108 to the node device 108a or communicated directly to the node device 108a, if e.g. changes in the association have occurred.

The node device 108a has still the same network address NA so it now obtains, by means of its controller 430, a network address of the new (current) sink device 104a from the known association mechanism, by means of its controller 430 and the communicator 436, when the node device 108a associates with said intermediate node device 108.

At step 222, the node device 108a regenerates (generates), by means of its controller 430, its new internet address IA when the routing occurs now between the node device 108a and the new sink device 104b instead of the previous sink device 104a. The node device 108a regenerates the new internet address IA from a sink identifier ID, which relates to the new sink device 104b, and from the network address NA by processing the sink identifier ID and the network address NA at least partly correspondingly as above has been explained at step 214, e.g. by using at least one of a concatenation, hashing, and other processing of the sink identifier ID and the network address NA. The sink identifier ID also comprises the network address of the sink device 104b, e.g. a 32-bits long DECT-2020 NR RD-ID identifier, a generated random value RA, or any identifier, which enables to identify the sink device 104b. Alternatively, the sink identifier ID may comprise any identifier, e.g. an identifier of the border router 103b to which the sink device 104b is connected, which enables the system 100 to communicate data from the external network(s) 106 to the node device 108a through the sink device 104b.

The node device 108a includes the processed sink identifier ID and network address NA in the IID field of the address format AF. The generated new internet address IA thus consists of the subnet prefix PR in the subnet prefix field and the processed sink identifier ID and network address NA in the IID field to secure an accessibility of the node device 108a from outside the network 102.

At step 224, the node device 108a communicates, by means of the controller 430 and the communicator 436, to the sink device 104b by sending an uplink packet communication UL to inform at least one of the sink device 104b, the border router 103b to which the sink device 104b is connected, and an external device 107, e.g. only the sink device 104b, only the border router 103b, the sink device 104b and the border router 103b, the sink device 104b and an external device 107 when relevant, the border router 103b and the external device 107 when relevant, or all of devices 103b, 104b, 107 when relevant, about its new internet address IA. After receiving the packet communication UL, its receiver(s), which comprises at least one of the border router 103b and the sink device 104b, is configured to update its ND proxy cache with the current address IA of the node device 108a.

The IP communication UL comprises the address of the node device 108a as a source, an address of the receiver 103b, 104b, 107, e.g. the address of the border router 103b, sink device 104b, or an external device 107, and in a payload of the packet communication UL, a unique identifier UID, which enables an external device 107 to send a downlink packet communications DL from outside the network 102 to the correct node device 108a. Additionally, the payload of the packet communication UL may comprise the previous internet address IA, which comprises the sink identifier ID of the previous sink device 104a. Additionally or alternatively in relation to the previous identifier option, the payload of the packet communication UL may comprise its new internet address IA. Additionally to the previous option, the payload of the packet communication UL may also comprise other information, e.g. the application related data.

The node device 108a sends the informative packet communication UL after the generation of the new internet address IA or when a need to send e.g. next application related data occurs.

At step 226, if the node device 108a changes the routing of its packet communications UL, DL again so that the sink device 104b is changed to another sink device 104, the method returns to step 220 so that a next internet address IA of the node device 108a will be regenerated.

Similarly as at step 218, after the node device 108a has decided to carry out the further sink change, it does not inform the previous sink 104b about the forthcoming sink change. Alternatively, when the node device 108a makes a decision to carry out the further sink change between the sink devices 104b, 104, it may inform the previous sink device 104b, border router 103b, or both devices 103b, 104b about the sink change by sending an uplink packet communication RE to the previous device(s) 103b, 104b to inform the sink change, whereupon the previous device(s) 103b, 104b may update its ND proxy cache by removing a non-existing association. Alternatively, the node device 108a may send the packet communication RE, which informs about the sink change, to the new sink device 104, border router 103, or both devices 103, 104 that inform(s) the previous device(s) 103b, 104b about the sink change.

Fig. 4 presents the node device 108 that is configured to communicate with sink and other node devices 104, 108 in the network 102 as well as to carry out the relevant features (steps) of the address generation method 210 as above has been explained.

The node device 108 comprises a controller 430 that is configured to control operations of its parts 432, 434, 436, 438, 440 so that the node device 108 operates as above has been explained.

The controller 430 comprises the processor 432 that is configured to carry out at least one of operator-initiated and computer program-initiated instructions as well as to process data in order to run necessary applications. The processor 432 may comprise at least one processor, e.g. one, two, three, four, or more processors 432.

The controller 430 also comprises the memory 434 that is configured to store and to maintain data. The data may be instructions, computer programs, and data files. The memory 434 comprises at least one memory, e.g. one, two, three, four, or more memories 434.

The node device 108 also comprises the communicator 436 and an antenna 438 that the controller 430 is configured to use in order to send commands, requests, and data to at least one of entities in the system 100, e.g. devices 104, 108, via the antenna 438. The controller 430 is also configured to use the communicator 436 in order to receive commands, requests, and data from at least one of entities in the system 100, e.g. devices 104, 108, via the antenna 438. The communication between the communicator 436 and other entities 104, 108 in the system 100 is provided through the antenna 438 wirelessly.

The node device 108 also comprises a power supplier 440. The power supplier 440 comprises components that are configured to power the node device 108, e.g. a battery and a regulator.

The memory 434 is configured to store at least a communication application 442 to operate (control) the communicator 436 and a power supply application 444 to operate the power supplier 440. The memory 434 is also configured to store a computer program (computer software, computer application) 446, which is configured to use at least one of parts 436, 438, 440 in order to perform at least the operations of the node device 108 explained above in context of the previous figures, when it is carried out (executed, performed, run) in a computer, e.g. in the node device 108, by means of the controller 430.

The computer program 446 may be stored in a tangible, non-volatile computer-readable storage medium, e.g. a Compact Disc (CD) or Universal Serial Bus (USB) -type storage device.

The address generation has been now explained above with reference to the aforesaid exemplary embodiments and its several advantages have been demonstrated. It is clear that the address generation is not only restricted to these embodiments, but it comprises all possible embodiments within the scope of the following claims.

## Claims

1. An address generation system (100) for a wireless communication network (102) comprising
at least one sink device (104, 104a, 104b), and
at least one radio node device (108, 108a, 108b),
wherein each sink device (104, 104a, 104b) is configured to operate as a radio interface for a border router device (103, 103a, 103b) in the wireless communication network and
wherein each radio node device (108, 108a, 108b) is configured to communicate with the at least one sink device or other radio node device (108) belonging to the at least one radio node device,
wherein each radio node device is further configured to generate its internet address, IA; from a sink identifier, ID, of a current routing sink device (104, 104a, 104b) belonging to the at least one sink device and a wireless communication network address, NA, of said radio node device by including the processed sink identifier and network address (ID, NA) to an interface identifier, IID, field of the internet address, wherein the wireless communication network comprises a digital European cordless telecommunication, DECT, 2020 -based network, the internet address comprises a unicast internet protocol address, the sink identifier comprises an identifier configured to identify said sink device, and the network address comprises a long radio device identifier, RD-ID, of said radio node device, so that said radio node device is accessible through said sink device.

2. The generation system according to the previous claim, wherein the sink identifier comprises a network address of said sink device or a random value configured to identify said sink device.

3. The generation system according to claim 1, wherein the internet address format further comprises an internet subnet prefix, PR, in an internet subnet prefix field.

4. The generation system according to any of the previous claims, wherein said radio node device is further configured to regenerate the internet address when said radio node device has changed a routing from a previous sink device (104, 104a) belonging to the at least one sink device to said sink device in the wireless communication network.

5. The generation system according to any of the previous claims, wherein said radio node device is further configured to include the generated internet address in an uplink packet communication, UL.

6. The generation system according to claim 5, wherein said radio node device is further configured to include at least a unique identifier, UID, of said radio node device in the uplink packet communication.

7. The generation system according to claim 6, wherein said radio node device is further configured to include at least its previous internet address, IA, which comprises a sink identifier, ID, of a previous sink device (103, 103a) belonging to the at least one sink device in the uplink packet communication.

8. The generation system according to any of the previous claims, wherein said radio node device is further configured to send an uplink packet communication, UL, comprising the generated internet address to at least said sink device.

9. The generation system according to any of claims 5-8, wherein the said radio node device is further configured to send the uplink packet communication after the generation of the internet address or when a need to send next data communication occurs.

10. The generation system according to any of the previous claims, wherein the generation system further comprises at least one border router device (103, 103a, 103b) comprising the border router device, which comprises the at least one sink device, and wherein the at least one border router device is configured to operate as a wireless communication network entry between at least one external communication (106) network and the wireless communication network.

11. A radio node device (108, 108a, 108b) for an address generation in a wireless communication network (102) comprising
a controller (430) and
a radio communicator (436),
wherein the controller and the radio communicator are configured to carry out a wireless communication with at least one sink device (104, 104a, 104b), which is configured to operate as a radio interface for a border router device (103, 103a, 103b) in the wireless communication network, or other radio node device (108, 108a, 108b) belonging to the wireless communication network,
wherein the controller is further configured to generate an internet address, IA, from a sink identifier, ID, of a current routing sink device (104, 104a, 104b) belonging to the at least one sink device and a wireless communication network address, NA, of said radio node device by including the processed sink identifier and network address (ID, NA) to an interface identifier, IID, field of the internet address, wherein the wireless communication network comprises a digital European cordless telecommunication, DECT, 2020 -based network, the internet address comprises a unicast internet protocol address, the sink identifier comprises an identifier configured to identify said sink device, and the network address comprises a long radio device identifier, RD-ID, of said radio node device, so that the radio node device is accessible through the sink device.

12. An address generation method (210) for a wireless communication network (102) comprising at least a following step of
communicating (216, 224), by a radio node device (108, 108a, 108b) with a sink device (104, 104a, 104b), which is configured to operate as a radio interface for a border router device (103, 103a, 103b) in the wireless communication network, or with other radio node device (108) belonging to the wireless communication network,
wherein the method further comprises a following step of generating (214, 222), by the radio node device (108, 108a), its internet address, IA, from a sink identifier, ID, of a current routing sink device (104, 104a, 104b) and a wireless communication network address, NA, of said radio node device by including the processed sink identifier and network address (ID, NA) to an interface identifier, IID, field of the internet address, wherein the wireless communication network comprises a digital European cordless telecommunication, DECT, 2020 -based network, the internet address comprises a unicast internet protocol address, the sink identifier comprises an identifier configured to identify said sink device, and the network address comprises a long radio device identifier, RD-ID, of said radio node device, so that said radio node device is accessible through said sink device.

13. A computer program (446) comprising instructions, which, when the computer program is executed by a processor (432), cause a radio node device (108, 108a, 108b) to carry out at least the steps of the method according to claim 12.

14. A tangible, non-volatile computer readable medium comprising the computer program (446) according to claim 13.

## Patentansprüche

1. Adressenerzeugungssystem (100) für ein drahtloses Kommunikationsnetzwerk (102), umfassend mindestens eine Senkenvorrichtung (104, 104a, 104b), und mindestens eine Funkknotenvorrichtung (108, 108a, 108b), wobei jede Senkenvorrichtung (104, 104a, 104b) konfiguriert ist, um als Funkschnittstelle für eine Grenzroutervorrichtung (103, 103a, 103b) in dem drahtlosen Kommunikationsnetzwerk zu arbeiten und
wobei jede Funkknotenvorrichtung (108, 108a, 108b) konfiguriert ist, um mit der mindestens einen Senkenvorrichtung oder einer anderen Funkknotenvorrichtung (108), die zu der mindestens einen Funkknotenvorrichtung gehört, zu kommunizieren,
wobei jede Funkknotenvorrichtung ferner konfiguriert ist, um ihre Internetadresse, IA; aus einer Senkenkennung, ID, einer aktuellen Routing-Senkenvorrichtung (104, 104a, 104b), die zu der mindestens einen Senkenvorrichtung gehört, und einer drahtlosen Kommunikationsnetzwerkadresse, NA, der Funkknotenvorrichtung durch Einfügen der verarbeiteten Senkenkennung und Netzwerkadresse (ID, NA) in ein Schnittstellenerkennungsfeld, IID, der Internetadresse zu erzeugen, wobei das drahtlose Kommunikationsnetzwerk ein digitales europäisches drahtloses Telekommunikationsnetzwerk umfasst, DECT, 2020 - basiertes Netzwerk umfasst, die Internetadresse eine Unicast-Internetprotokolladresse umfasst, die Senkenkennung eine Kennung umfasst, die konfiguriert ist, um die Senkenvorrichtung zu identifizieren, und die Netzwerkadresse eine lange Funkvorrichtungskennung, RD-ID, der Funkknotenvorrichtung umfasst, sodass die Funkknotenvorrichtung über die Senkenvorrichtung zugänglich ist.

2. Erzeugungssystem nach dem vorstehenden Anspruch, wobei die Senkenkennung eine Netzwerkadresse der Senkenvorrichtung oder einen Zufallswert umfasst, der konfiguriert ist, um die Senkenvorrichtung zu identifizieren.

3. Erzeugungssystem nach Anspruch 1, wobei das Internetadressenformat ferner ein Internet-Subnetz-Präfix, PR, in einem Internet-Subnetz-Präfixfeld umfasst.

4. Erzeugungssystem nach einem der vorstehenden Ansprüche, wobei die Funkknotenvorrichtung ferner konfiguriert ist, um die Internetadresse neu zu generieren, wenn die Funkknotenvorrichtung eine Leitweglenkung von einer vorherigen Senkenvorrichtung (104, 104a), die zu der mindestens einen Senkenvorrichtung gehört, zu der Senkenvorrichtung in dem drahtlosen Kommunikationsnetz geändert hat.

5. Erzeugungssystem nach einem der vorstehenden Ansprüche, wobei die Funkknotenvorrichtung ferner konfiguriert ist, um die erzeugte Internetadresse in eine Uplink-Paketkommunikation, UL, aufzunehmen.

6. Erzeugungssystem nach Anspruch 5, wobei die Funkknotenvorrichtung ferner konfiguriert ist, um mindestens eine eindeutige Kennung, UID, der Funkknotenvorrichtung in die Uplink-Paketkommunikation aufzunehmen.

7. Erzeugungssystem nach Anspruch 6, wobei die Funkknotenvorrichtung ferner konfiguriert ist, um mindestens ihre vorherige Internetadresse IA, die eine Senkenkennung, ID, einer vorherigen Senkenvorrichtung (103, 103a) umfasst, die zu der mindestens einen Senkenvorrichtung gehört, in die Uplink-Paketkommunikation aufzunehmen.

8. Erzeugungssystem nach einem der vorstehenden Ansprüche, wobei die Funkknotenvorrichtung ferner konfiguriert ist, um eine Uplink-Paketkommunikation, UL, die die erzeugte Internetadresse umfasst, an mindestens die Senkenvorrichtung zu senden.

9. Erzeugungssystem nach einem der Ansprüche 5 bis 8, wobei die Funkknotenvorrichtung ferner konfiguriert ist, um die Uplink-Paketkommunikation nach der Erzeugung der Internetadresse zu senden oder wenn eine Notwendigkeit zum Senden der nächsten Datenkommunikation auftritt.

10. Erzeugungssystem nach einem der vorstehenden Ansprüche, wobei das Erzeugungssystem ferner mindestens eine Grenzroutervorrichtung (103, 103a, 103b) umfasst, die die Grenzroutervorrichtung umfasst, welche die mindestens eine Senkenvorrichtung umfasst, und wobei die mindestens eine Grenzroutervorrichtung konfiguriert ist, um als ein drahtloser Kommunikationsnetzwerkeingang zwischen mindestens einem externen Kommunikationsnetzwerk (106) und dem drahtlosen Kommunikationsnetzwerk zu arbeiten.

11. Funkknotenvorrichtung (108, 108a, 108b) für eine Adressenerzeugung in einem drahtlosen Kommunikationsnetzwerk (102), umfassend
eine Steuerung (430) und
ein Funkgerät (436),
wobei die Steuerung und das Funkgerät konfiguriert sind, um eine drahtlose Kommunikation mit mindestens einer Senkenvorrichtung (104, 104a, 104b) durchzuführen, die konfiguriert ist, um als eine Funkschnittstelle für eine Grenzroutervorrichtung (103, 103a, 103b) in dem drahtlosen Kommunikationsnetzwerk oder eine andere Funkknotenvorrichtung (108, 108a, 108b), die zu dem drahtlosen Kommunikationsnetzwerk gehört, zu arbeiten,
wobei die Steuerung ferner konfiguriert ist, um eine Internetzadresse, IA, aus einer Senkenkennung, ID, einer aktuellen Routing-Senkenvorrichtung (104, 104a, 104b), die zu der mindestens einen Senkenvorrichtung gehört, und einer drahtlosen Kommunikationsnetzadresse, NA, der Funkknotenvorrichtung zu erzeugen, indem die verarbeitete Senkenkennung und die Netzwerkadresse (ID, NA) in ein Schnittstellenerkennungsfeld, IID, der Internetadresse aufgenommen werden, wobei das drahtlose Kommunikationsnetzwerk ein digitales europäisches drahtloses Telekommunikationsnetzwerk umfasst, DECT, 2020 -basiertes Netzwerk umfasst, die Internetadresse eine Unicast-Internetprotokolladresse umfasst, die Senkenkennung eine Kennung umfasst, die konfiguriert ist, um die Senkenvorrichtung zu identifizieren, und die Netzwerkadresse eine lange Funkvorrichtungskennung, RD-ID, der Funkknotenvorrichtung umfasst, sodass die Funkknotenvorrichtung über die Senkenvorrichtung zugänglich ist.

12. Verfahren zur Adressenerzeugung (210) für ein drahtloses Kommunikationsnetzwerk (102), umfassend mindestens den folgenden Schritt
Kommunizieren (216, 224) durch eine Funkknotenvorrichtung (108, 108a, 108b) mit einer Senkenvorrichtung (104, 104a, 104b), die konfiguriert ist, um als Funkschnittstelle für eine Grenzroutervorrichtung (103, 103a, 103b) in dem drahtlosen Kommunikationsnetzwerk zu arbeiten, oder mit anderen Funkknotenvorrichtungen (108), die zu dem drahtlosen Kommunikationsnetzwerk gehören,
wobei das Verfahren ferner einen folgenden Schritt des Erzeugens (214, 222) durch die Funkknotenvorrichtung (108, 108a) ihrer Internetadresse, IA, aus einer Senkenkennung, ID, einer aktuellen Routing-Senkenvorrichtung (104, 104a, 104b) und einer drahtlosen Kommunikationsnetzwerkadresse, NA, der Funkknotenvorrichtung durch Einfügen der verarbeiteten Senkenkennung und Netzwerkadresse (ID, NA) in ein Schnittstellenerkennungsfeld, IID, der Internetadresse umfasst, wobei das drahtlose Kommunikationsnetzwerk ein digitales europäisches drahtloses Telekommunikationsnetzwerk, DECT, 2020-basiertes Netzwerk umfasst, die Internetadresse eine Unicast-Internetprotokolladresse umfasst, die Senkenkennung eine Kennung umfasst, die konfiguriert ist, um die Senkenvorrichtung zu identifizieren, und die Netzwerkadresse eine lange Funkvorrichtungskennung, RD-ID, der Funkknotenvorrichtung umfasst, sodass die Funkknotenvorrichtung über die Senkenvorrichtung zugänglich ist.

13. Computerprogramm (446), umfassend Anweisungen, die, wenn das Computerprogramm von einem Prozessor (432) ausgeführt wird, eine Funkknotenvorrichtung (108, 108a, 108b) veranlassen, mindestens die Schritte des Verfahrens nach Anspruch 12 auszuführen.

14. Greifbares, nichtflüchtiges computerlesbares Medium, umfassend das Computerprogramm (446) nach Anspruch 13.

## Revendications

1. Système de génération d'adresses (100) pour un réseau de communication sans fil (102) comprenant
au moins un dispositif récepteur (104, 104a, 104b), et
au moins un dispositif de nœud radio (108, 108a, 108b), dans lequel chaque dispositif récepteur (104, 104a, 104b) est configuré pour fonctionner comme une interface radio pour un dispositif de routeur de bordure (103, 103a, 103b) dans le réseau de communication sans fil et
dans lequel chaque dispositif de nœud radio (108, 108a, 108b) est configuré pour communiquer avec l'au moins un dispositif récepteur ou un autre dispositif de nœud radio (108) appartenant à l'au moins un dispositif de nœud radio,
dans lequel chaque dispositif de nœud radio est en outre configuré pour générer son adresse Internet, IA ; à partir d'un identifiant récepteur, ID, d'un dispositif récepteur de routage actuel (104, 104a, 104b) appartenant à l'au moins un dispositif récepteur et d'une adresse de réseau de communication sans fil, NA, dudit dispositif de nœud radio en incluant l'identifiant récepteur et l'adresse réseau traités (ID, NA) dans un champ d'identifiant d'interface, IID, de l'adresse Internet, dans lequel le réseau de communication sans fil comprend un réseau sur la base de télécommunications européennes numériques sans fil, DECT, 2020, l'adresse Internet comprend une adresse de protocole Internet unicast, l'identifiant récepteur comprend un identifiant configuré pour identifier ledit dispositif récepteur, et l'adresse réseau comprend un identifiant de dispositif radio long, RD-ID, dudit dispositif de nœud radio, de sorte que ledit dispositif de nœud radio soit accessible par le biais dudit dispositif récepteur.

2. Système de génération selon la revendication précédente, dans lequel l'identifiant récepteur comprend une adresse réseau dudit dispositif récepteur ou une valeur aléatoire configurée pour identifier ledit dispositif récepteur.

3. Système de génération selon la revendication 1, dans lequel le format d'adresse Internet comprend en outre un préfixe de sous-réseau Internet, PR, dans un champ de préfixe de sous-réseau Internet.

4. Système de génération selon l'une quelconque des revendications précédentes, dans lequel ledit dispositif de nœud radio est en outre configuré pour régénérer l'adresse Internet lorsque ledit dispositif de nœud radio a modifié un routage d'un dispositif récepteur précédent (104, 104a) appartenant à l'au moins un dispositif récepteur vers ledit dispositif récepteur dans le réseau de communication sans fil.

5. Système de génération selon l'une quelconque des revendications précédentes, dans lequel ledit dispositif de nœud radio est en outre configuré pour comporter l'adresse Internet générée dans une communication de paquet de liaison montante, UL.

6. Système de génération selon la revendication 5, dans lequel ledit dispositif de nœud radio est en outre configuré pour inclure au moins un identifiant unique, UID, dudit dispositif de nœud radio dans la communication de paquet de liaison montante.

7. Système de génération selon la revendication 6, dans lequel ledit dispositif de nœud radio est en outre configuré pour inclure au moins son adresse Internet précédente, IA, qui comprend un identifiant récepteur, ID, d'un dispositif récepteur précédent (103, 103a) appartenant à l'au moins un dispositif récepteur dans la communication de paquet de liaison montante.

8. Système de génération selon l'une quelconque des revendications précédentes, dans lequel ledit dispositif de nœud radio est en outre configuré pour envoyer une communication de paquet de liaison montante, UL, comprenant l'adresse Internet générée à au moins ledit dispositif récepteur.

9. Système de génération selon l'une quelconque des revendications 5 à 8, dans lequel ledit dispositif de nœud radio est en outre configuré pour envoyer la communication de paquet de liaison montante après la génération de l'adresse Internet ou lorsqu'un besoin d'envoyer une communication de données suivante se présente.

10. Système de génération selon l'une quelconque des revendications précédentes, dans lequel le système de génération comprend en outre au moins un dispositif de routeur de bordure (103, 103a, 103b) comprenant le dispositif de routeur de bordure, qui comprend l'au moins un dispositif récepteur, et dans lequel l'au moins un dispositif de routeur de bordure est configuré pour fonctionner comme une entrée de réseau de communication sans fil entre au moins un réseau de communication externe (106) et le réseau de communication sans fil.

11. Dispositif de nœud radio (108, 108a, 108b) pour la génération d'adresses dans un réseau de communication sans fil (102) comprenant
un dispositif de commande (430) et
un communicateur radio (436),
dans lequel le dispositif de commande et le communicateur radio sont configurés pour réaliser une communication sans fil avec au moins un dispositif récepteur (104, 104a, 104b), qui est configuré pour fonctionner comme une interface radio pour un dispositif de routeur de bordure (103, 103a, 103b) dans le réseau de communication sans fil, ou un autre dispositif de nœud radio (108, 108a, 108b) appartenant au réseau de communication sans fil,
dans lequel le dispositif de commande est en outre configuré pour générer une adresse Internet, IA, à partir d'un identifiant récepteur, ID, d'un dispositif récepteur de routage actuel (104, 104a, 104b) appartenant à l'au moins un dispositif récepteur et une adresse de réseau de communication sans fil, NA, dudit dispositif de nœud radio en incluant l'identifiant récepteur et l'adresse réseau traités (ID, NA) dans un champ d'identifiant d'interface, IID, de l'adresse Internet, dans lequel le réseau de communication sans fil comprend un réseau sur la base de télécommunications européennes numériques sans fil, DECT 2020, l'adresse Internet comprend une adresse de protocole Internet unicast, l'identifiant récepteur comprend un identifiant configuré pour identifier ledit dispositif récepteur, et l'adresse réseau comprend un identifiant de dispositif radio long, RD-ID, dudit dispositif de nœud radio, de sorte que le dispositif de nœud radio soit accessible par le biais du dispositif récepteur.

12. Procédé de génération d'adresses (210) pour un réseau de communication sans fil (102) comprenant au moins une étape suivante de
communication (216, 224), par un dispositif de nœud radio (108, 108a, 108b) avec un dispositif récepteur (104, 104a, 104b), qui est configuré pour fonctionner comme une interface radio pour un dispositif de routeur de bordure (103, 103a, 103b) dans le réseau de communication sans fil, ou avec un autre dispositif de nœud radio (108) appartenant au réseau de communication sans fil,
dans lequel le procédé comprend en outre une étape suivante de génération (214, 222), par le dispositif de nœud radio (108, 108a), de son adresse Internet, IA, à partir d'un identifiant récepteur, ID, d'un dispositif récepteur de routage actuel (104, 104a, 104b) et d'une adresse de réseau de communication sans fil, NA, dudit dispositif de nœud radio en incluant l'identifiant récepteur et l'adresse réseau traités (ID, NA) dans un champ d'identifiant d'interface, IID, de l'adresse Internet, dans lequel le réseau de communication sans fil comprend un réseau sur la base de télécommunications européennes numériques sans fil, DECT 2020, l'adresse Internet comprend une adresse de protocole Internet unicast, l'identifiant récepteur comprend un identifiant configuré pour identifier ledit dispositif récepteur, et l'adresse réseau comprend un identifiant de dispositif radio long, RD-ID, dudit dispositif de nœud radio, de sorte que ledit dispositif de nœud radio soit accessible à l'aide dudit dispositif récepteur.

13. Programme informatique (446) comprenant des instructions qui, lorsque le programme informatique est exécuté par un processeur (432), amènent un dispositif de nœud radio (108, 108a, 108b) à réaliser au moins les étapes du procédé selon la revendication 12.

14. Support tangible, non volatil et lisible par ordinateur comprenant le programme informatique (446) selon la revendication 13.
